# EUROPÄISCHE PATENTANMELDUNG

(11) **EP 4 640 397 A1**
(43) Veröffentlichungstag der Anmeldung: **29.10.2025**
(21) Anmeldenummer: 25169638.1
(22) Anmeldetag: 10.04.2025
(51) Int. Cl.: B29C 43/24, B29C 48/08

(54) **GLÄTTWERK**

(30) Priorität: 23.04.2024 DE 102024111423
(71) Anmelder: SML Maschinengesellschaft m.b.H., 4846 Redlham (AT)
(72) Erfinder: MERSNIK, Udo, 4800 Wankham (AT)
(74) Vertreter: Gosdin, Carstensen & Partner Patentanwälte Partnerschaftgesellschaft mbB

(57) **Zusammenfassung**

Die Erfindung betrifft ein Glättwerk (1), umfassend mindestens zwei zusammenwirkende Walzen (2, 3, 4), die zwischen sich einen Walzspalt ausbilden können, wobei das Glättwerk (1) einen Maschinenrahmen (5) aufweist, in dem die Walzen (2, 3, 4) drehbar gelagert sind, wobei der Maschinenrahmen (5) einen ersten Teil (6) und einen zweiten Teil (7) aufweist, wobei jeder Teil (6, 7) jeweils mindestens eine Walze (2, 3, 4) lagert und wobei Kopplungsmittel (8) angeordnet sind, um den ersten Teil (6) des Maschinenrahmens (5) mit dem zweiten Teil (7) des Maschinenrahmens (5) lösbar zu verbinden. Um es in einfacher Weise auch bei schweren Walzen zu ermöglichen, problemlos die Zugänglichkeit zu den Walzen zu verschaffen, um insbesondere Wartungsarbeiten und Austauscharbeiten in einfacher Weise betriebssicher vornehmen zu können, sieht die Erfindung vor, dass Bewegungsmittel (12) angeordnet sind, um das Glättwerk (1) bei gekoppeltem ersten und zweiten Teil (6, 7) in horizontaler Richtung (H) und in Richtung senkrecht zur Achse der Walzen (2, 3, 4) zu verschieben und um den ersten Teil (6) relativ zum zweiten Teil (7) nach Entkopplung des ersten Teils (6) vom zweiten Teil (7) in horizontaler Richtung (H) und in Richtung senkrecht zur Achse der Walzen (2, 3, 4) zu verschieben.

## Beschreibung

Die Erfindung betrifft ein Glättwerk, umfassend mindestens zwei zusammenwirkende Walzen, die zwischen sich einen Walzspalt ausbilden können, wobei das Glättwerk einen Maschinenrahmen aufweist, in dem die Walzen drehbar gelagert sind, wobei der Maschinenrahmen einen ersten Teil und einen zweiten Teil aufweist, wobei jeder Teil jeweils mindestens eine Walze lagert und wobei Kopplungsmittel angeordnet sind, um den ersten Teil des Maschinenrahmens mit dem zweiten Teil des Maschinenrahmens lösbar zu verbinden.

Glättwerke dieser Art kommen bei der Produktion von Kunststofffolien und Kunststoffplatten zum Einsatz. Dabei wird eine in einer Extrusionsanlage hergestellte Kunststoffschmelze durch eine Breitschlitzdüse ausgebracht und durch einen Spalt zwischen zwei Walzen hindurchgeführt. Bei der Abkühlung entsteht eine Folienbahn. Im Glättwerk sind üblicherweise mindestens zwei Walzen angeordnet, von denen eine Walze ortsfest und die andere Walze als Zustellwalze relativ zur ersten Walze ausgeführt ist. Die Zustellwalze ist in ihrer Lage einstellbar, so dass unterschiedliche Walzenspalte zwischen den beiden Walzen einstellbar sind. Somit können Folien unterschiedlicher Dicke hergestellt werden.

Die zum Einsatz kommenden Walzen sind relativ groß und schwer, so dass deren Handhabung mitunter Probleme bereitet.

Aus der EP 1 285 740 A1 ist zur Bewältigung dieser Problematik ein Glättwerk bekannt, welches aus zwei modular aufgebauten Einheiten besteht. Ein Modul ist als Wagen ausgeführt und kann somit getauscht bzw. entfernt werden. Dieser Wagen kann eine Kühl- bzw. Glättwalze aufnehmen. Für große Walzenbreiten ist das Bewegen und Manövrieren eines solchen Wagens auf Grund der Größe und des Gewichts schwierig und nicht praktikabel. Daher wird bei dieser vorbekannten Lösung eine Ablegevorrichtung vorgeschlagen. Das Glättwerk wird über den Fahrantrieb, welcher auch zur Positionierung in der Arbeitsposition dient, in die Parkposition gefahren. Ferner ist die dort beschriebene Wagenkonstruktion abhängig von den zu übertragenden Kräften sehr aufwändig, da hierfür auch entsprechende Hydraulikzylinder und Hebelarme untergebracht werden müssen.

Aus der DE 10 2014 102 167 A1 ist Wechselmagazin zum Austausch von Walzen in einem Glättwerk bzw. in einem Kalander bekannt. Hierdurch können Walzen in eine Parkposition gebracht werden, welche sich am Rande des Maschinengestells befindet. Allerdings ist hierdurch problematisch, dass die Zugänglichkeit nicht ohne Weiteres gegeben ist. Insbesondere ist in einer Mehrwalzenanordnung nur die erste und letzte Walze zugänglich.

Die US 5 006 056 A löst das Problem ähnlich wie die EP 1 285 740 A1 durch Herausfahren der Hauptkühlwalze, welche von anderen Walzen umgeben wird. Allerdings ist das dort beschriebene Konzept aus denselben Gründen nachteilig und schwächt zudem die Gesamtkonstruktion des Glättwerks. Ebenso müssen Versorgungsleitung für Wasser und Strom für das Herausfahren getrennt oder entsprechend lange ausgeführt werden.

In der US 4 632 655 A wird eine Kranvorrichtung zum Wechseln von Walzen beschrieben, so dass insofern eine entsprechende Krananlage für die Wartung bzw. den Wechsel der Walzen erforderlich ist.

Auch die EP 2 746 024 B1 offenbart ein gattungsgemäßes Glättwerk. Allerdings ist hier ein Zahnstangen-Einstellsystem für die Einstellung einer Walze Gegenstand der dort beschriebenen Erfindung.

Weitere ähnliche Lösungen zeigen die DE 198 49 633 A1, die DE 203 13 769 U1 und die US 7 754 116 B1**.**

Im Lichte der vorbekannten Lösungen liegt der vorliegenden Erfindung somit die **Aufgabe** zugrunde, es in einfacher Weise auch bei schweren Walzen zu ermöglichen, problemlos die Zugänglichkeit zu den Walzen zu verschaffen, um insbesondere Wartungsarbeiten und Austauscharbeiten in einfacher Weise betriebssicher vornehmen zu können.

Die **Lösung** dieser Aufgabe durch die Erfindung ist dadurch gekennzeichnet, dass Bewegungsmittel angeordnet sind, um das Glättwerk bei gekoppeltem ersten und zweiten Teil in horizontaler Richtung und in Richtung senkrecht zur Achse der Walzen zu verschieben und um den ersten Teil relativ zum zweiten Teil nach Entkopplung des ersten Teils vom zweiten Teil in horizontaler Richtung und in Richtung senkrecht zur Achse der Walzen zu verschieben.

Im Unterschied zu vorbekannten Lösungen wird also nicht mittels eines separaten Wagens oder Ähnlichem eine Walze des Glättwerks aufgenommen und aus der Anlage gefahren, sondern der Maschinenrahmen wird geteilt, so das jeweiligen Teile des Maschinenrahmens voneinander wegbewegt werden können.

Die Kopplungsmittel sind bevorzugt als formschlüssige Verbindung zwischen erstem und zweitem Teil des Maschinenrahmens ausgebildet. Hierbei können Haken, Prismen, Koni und ähnliche Elemente eingesetzt werden, um die lösbare Verbindung zwischen beiden Teilen des Maschinenrahmens herzustellen.

Die genannten Kopplungsmittel sind bevorzugt als kongruent zusammenwirkende Hakenverbindung ausgebildet. Die Hakenverbindung weist in diesem Falle mindestens einen am einen (insbesondere am ersten) Teil des Maschinenrahmens ausgebildeten Haken auf, welcher formschlüssig in mindestens eine am anderen (insbesondere am zweiten) Teil des Maschinenrahmens ausgebildete Ausnehmung eingreifen kann.

Die Kopplungsmittel können weiterhin Verriegelungsmittel umfassen, mit denen die beiden Teil des Maschinenrahmens in der gekoppelten Position miteinander verriegelt werden können. Damit ist ein stabiler Verbund des ersten und des zweiten Teils des Maschinenrahmens gegeben, so dass die Produktion einwandfrei durchgeführt werden kann.

Zumindest in einem Teil des Maschinenrahmens können Bewegungsmittel angeordnet sein, um den einen Teil des Maschinenrahmens von einer gekoppelten Position in eine ungekoppelte Position zu bewegen. Insbesondere kann eine Absenkung des einen Teils des Maschinenrahmens relativ zum anderen Teil des Maschinenrahmens durch die Bewegungsmittel bewerkstelligt werden. Vorgesehen werden kann insbesondere, dass die Bewegungsmittel zur Verschiebung des einen Teils des Maschinenrahmens relativ zum anderen Teil des Maschinenrahmens in eine vertikale Richtung ausgebildet sind.

Bevorzugt weist das Glättwerk weiterhin eine Ablage für den einen Teil des Maschinenrahmens auf. Damit kann der eine Teil des Maschinenrahmens samt Walze bevorzugt alleine durch Nutzung der genannten Bewegungsmittel beabstandet vom anderen Teil des Maschinenrahmens abgesetzt werden, um eine günstige Zugangsmöglichkeit zwischen den Walzen zu schaffen.

Die am zweiten Teil des Maschinenrahmens angeordnete Walze ist insbesondere eine Temperierwalze, speziell eine Kühlwalze.

Die am zweiten Teil des Maschinenrahmens angeordnete Walze steht bevorzugt auch mit einer Medienversorgung und/oder elektrischen Versorgung in Verbindung, welche sowohl in der mit dem ersten Teil gekoppelten als auch ungekoppelten Position an der Walze verbleibt.

Durch die vorgeschlagene Ausgestaltung der Verbindungsmittel für die beiden Teile des Maschinenrahmens ist sehr vorteilhaft auch eine automatische Trennung der beiden Teile des Maschinenrahmens bzw. gleichermaßen ein automatisches Verbinden derselben möglich. Daher schlägt eine Weiterbildung vor, dass Steuerungs- und/oder Regelungsmittel sowie von diesen angesteuerte Bewegungsmittel vorhanden sind, um die relative Bewegung zwischen den beiden Teilen des Maschinenrahmens automatisch zu veranlassen. Demgemäß kann das Verfahren in die Parkposition für den zweiten Teil des Maschinenrahmens samt Walze, das Abkoppeln des zweiten Teils des Maschinenrahmens und das Ablegen in die Parkposition und/oder der umgekehrte Vorgang automatisiert erfolgen.

Die vorgeschlagene Teilung des Maschinenrahmens des Glättwerks lässt sich konstruktiv in einfacher und kostengünstiger Weise bewerkstelligen. In vorteilhafter Weise wird es dadurch insbesondere möglich, ohnehin vorhandene Bewegungselemente zum Verschieben von Maschinenteilen (Fahrantriebe) zu nutzen, um eine einfache Bewegung einer Walze in eine Position zu bewerkstelligen, in der die Wartung bzw. der Austausch der Walze einfach möglich wird. Spezielle weitere Elemente für die Bewegung von Maschinenteilen sind nicht erforderlich. Ferner kann das Verbringen einer Walze in eine Wartungs- bzw. Wechselposition ohne jedes Sicherheitsrisiko und ergonomisch günstig vorgenommen werden.

Die Verbringung einer Walze bzw. den zweiten Teil des Maschinenrahmens in die Parkposition (d. h. in die Ablage für den zweiten Teil des Maschinenrahmens) kann also durch die üblichen und integrierten Fahr- und Hubeinheiten vorgenommen werden, die ohnehin in der Maschine verfügbar sein müssen.

Während also vorbekannte Glättwerke bzw. deren Maschinenrahmen ungeteilt ausgeführt werden, wird nach dem vorliegenden Vorschlag durch die Teilung des Maschinenrahmens die Zugänglichkeit insbesondere bei großen Arbeitsbreiten und Walzendurchmessern zum Walzenreinigen wesentlich verbessert und der Aufwand hierfür stark reduziert. Das Absetzen des zweiten Teils des Maschinenrahmens mit der entsprechenden Walze erfolgt durch Verfahren und Absenken mit vorhandenen Antrieben, bis der zweite Teil in seiner Parkposition ist. Das Ab- bzw. Andocken des zweiten Teils am ersten Teil des Maschinenrahmens erfolgt insbesondere während des Absenkens bzw. Anhebens durch ein Hakensystem mit zusätzlichen Verriegelungs- und/oder Spannelementen.

Die Kühlwalzeneinheit kann somit in der Parkposition in einfacher Weise abgelegt werden. Der Fahr- und Hubantrieb des Glättwerks kommt für eine weitere Funktion zum Einsatz.

Die Medienversorgung (d. h. die Versorgung mit Kühlwasser und Elektrizität) bleibt erhalten. Der Antrieb sowie die Dreheinführung bleiben montiert.

Das Putzen in Parkposition ist bei verschiedenen Walzentemperaturen möglich, auch bei sich drehender Walze.

Auch bei einer Dreiwalzen-Anordnung ist die Zugänglichkeit zu jeder Walze gegeben.

Der Vorschlag macht sich besonders bei sehr großen Walzen positiv bemerkbar, die auch deutlich über 2 m Walzenlänge haben können.

Bevorzugt kommt ein Verriegelungsmechanismus zum Einsatz (mit dem die beiden Teile des Maschinenrahmens entkoppelt bzw. gekoppelt werden können), welcher automatisiert arbeitet. Damit kann ein vollautomatisches Trennen der beiden Teile des Maschinenrahmens erfolgen und das Verbringen des einen Teils in die Parkposition und entsprechend auch umgekehrt das Zusammenfahren und Verbinden der beiden Teile des Maschinenrahmens.

Ein weiterer Vorteil der vorgeschlagenen Lösung besteht in Folgendem: Bei großen Breiten des herzustellenden Materials oder um den Start des Prozesses zu erleichtern, wird in der Regel ein Einziehvlies zum Anfahren verwendet. Am oder auch außerhalb des Glättwerks kann eine Vorrichtung zur Aufnahme des sogenannten Einziehvlies angebracht sein. Das Einziehen ist im geteilten Zustand des Maschinenrahmens wesentlich einfacher möglich, wenn die vorgeschlagene Konzeption vorgesehen wird.

In den Zeichnungen ist ein Ausführungsbeispiel der Erfindung dargestellt.
- Figur 1: zeigt ein Glättwerk in der Seitenansicht in der Produktionsposition,
- Figur 2: zeigt das Glättwerk, welches nun mittels Bewegungsmitteln für die horizontale Bewegung in eine Parkposition (Wartungsposition) horizontal (nach links) verschoben wurde,
- Figur 3: zeigt das Glättwerk, bei dem ein zweiter Teil des Maschinenrahmens mit einer Walze in der Parkposition abgelegt wurde, während ein erster Teil des Maschinenrahmens horizontal (nach rechts) zurückgefahren wurde, und
- Figur 4: zeigt in perspektivischer Darstellung das Glättwerk gemäß Figur 3.

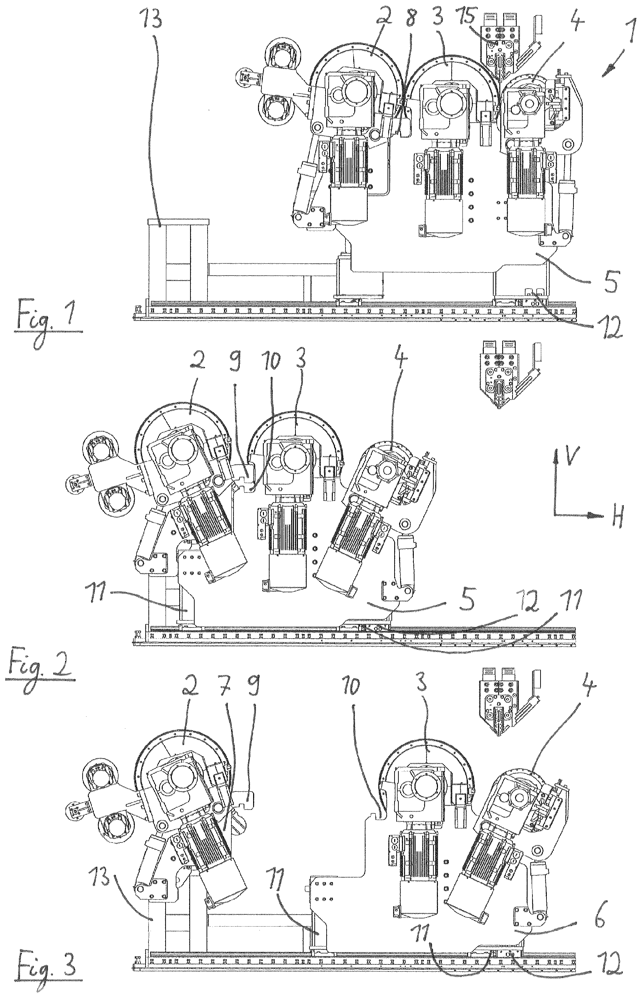

In den Figuren ist ein Glättwerk 1 dargestellt, welches zur Herstellung von Kunststofffolien dient. Figur 1 zeigt dabei den Betriebszustand, bei dem Kunststoffschmelze von einer Breitschlitzdüse 15 ausgebracht wird, welche zwischen zwei Walzen 3 und 4 gelangt. Durch den eingestellten Walzspalt zwischen den Walzen 3 und 4 wird die Folie geformt und dann über eine weitere Walze 2, welche als Kühlwalze fungiert, geführt. Die insoweit fertige (nicht dargestellte) Kunststofffolie verlässt in Figur 1 das Glättwerk 1 nach links in horizontale Richtung H.

Das Glättwerk 1 hat einen Maschinenrahmen 5, welcher erfindungsgemäß zweiteilig ausgebildet ist. Demgemäß besteht der Maschinenrahmen 5 aus einem ersten Teil 6 und einem zweiten Teil 7. In der Produktionsstellung (gemäß Figur 1) sind die beiden Teile 6, 7 fest miteinander verbunden. Zur Herstellung besagter Verbindung dienen Kopplungsmittel 8, die aus Haken 9 und korrespondierenden Ausnehmungen 10 bestehen. Namentlich weist im Ausführungsbeispiel der zweite Teil 7 des Maschinenrahmens 5 den Haken 9 auf (bzw. zwei Haken 9 in jeweiligen Endbereichen des Teils 7 des Maschinenrahmens), während im ersten Teil 6 kongruente Ausnehmungen 10 (in den jeweiligen Endbereichen des Teils 6 des Maschinenrahmens) ausgebildet sind. Wie sich aus Figur 1 ergibt, greifen die Haken 9 formschlüssig in die Ausnehmungen 10 ein, so dass beide Teile 6, 7 des Maschinenrahmens 5 fest und stabil miteinander verbunden sind.

Zwecks Wartungsarbeiten oder zum Zwecke des Wechsels der Walze 2 ist vorgesehen, dass der zweite Teil 7 des Maschinenrahmens 5 samt Walze 2 auf einer Ablage 13 abgelegt werden kann. Zu diesem Zweck wird das Glättwerk 1 zunächst von der aus Figur 1 dargestellten Position in horizontale Richtung H und in vertikale Richtung V in die in Figur 2 dargestellte Position verschoben.

Zur Verschiebung in horizontaler Richtung H dienen Bewegungsmittel 12, die ohnehin an einem Glättwerk 1 der beschriebenen Art typischerweise vorgesehen sind (um nämlich das Glättwerk präzise unter der Breitschlitzdüse 15 positionieren zu können). Dasselbe gilt für Bewegungsmittel 11 zur Verschiebung in vertikaler Richtung V.

Durch Fahren des Maschinenrahmens 5 mittels der Bewegungsmittel 12 in horizontaler Richtung H über die Ablage 13 und anschließendem Absenken mit der Bewegungsmittel 11 in vertikaler Richtung V wird der zweite Teil 7 auf der Ablage 13 abgelegt und der erste Teil 6 weiter abgesenkt, was in Figur 2 zu sehen ist. Demgemäß werden die Haken 9 aus den Ausnehmungen 10 herausgezogen.

In Figur 3 ist zu sehen, dass der zweite Teil 7 des Maschinenrahmens 5 auf der Ablage 13 abgelegt wurde und das vom zweiten Teil 7 abgekoppelte erste Teil 6 des Maschinenrahmens in horizontale Richtung H zurückgefahren wurde. Zwischen der Walze 2 und der Walze 3 liegt nunmehr ein weiter Abstand vor, der es ermöglicht, zwecks einschlägiger Arbeiten an der Anlage zwischen die Walzen 2, 3 zu treten.

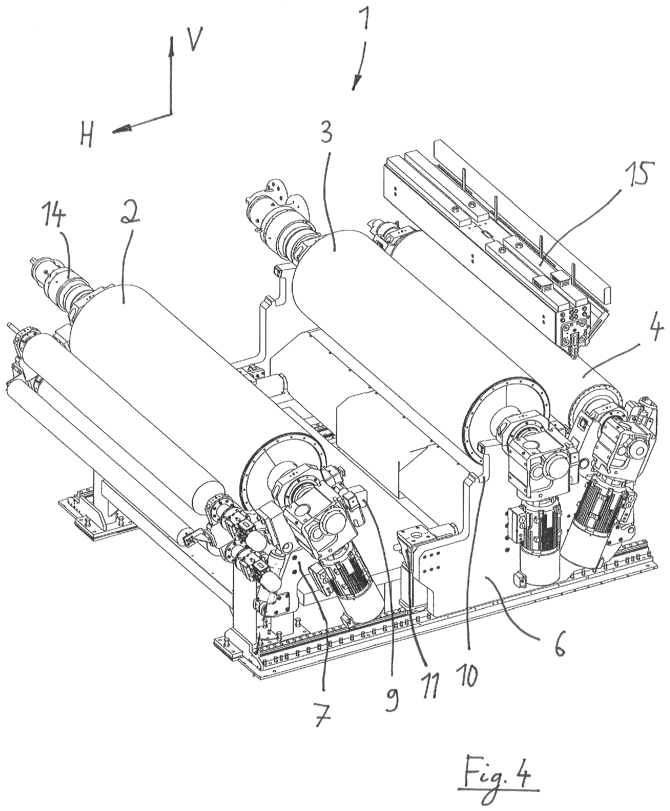

Ohne die Medienversorgung 14 (s. Figur 4) also von der Walze 2 und dem zweiten Teil 7 des Maschinenrahmens 5 trennen zu müssen, kann das Teil 7 samt Walze 2 wie in der in Figur 3 bzw. Figur 4 dargestellten Position auf der Ablage 13 abgesetzt werden und ist nunmehr für Wartungsarbeiten bzw. für Walzenwechselarbeiten gut zugänglich.

Erwähnt sei noch, dass in den Figuren 2, 3 und 4 die Walzen 2 und 4 in verschwenkten Positionen dargestellt sind; eine solche Anordnung mit Verschwenkungsmöglichkeit der Walzen ist als solches bekannt.

### Bezugszeichenliste:

- 1: Glättwerk
- 2: Walze
- 3: Walze
- 4: Walze
- 5: Maschinenrahmen
- 6: erster Teil des Maschinenrahmens
- 7: zweiter Teil des Maschinenrahmens
- 8: Kopplungsmittel
- 9: Haken
- 10: Ausnehmung
- 11: Bewegungsmittel für vertikale Bewegung
- 12: Bewegungsmittel für horizontale Bewegung
- 13: Ablage für den zweiten Teil des Maschinenrahmens
- 14: Medienversorgung / elektrische Versorgung
- 15: Breitschlitzdüse

- V: vertikale Richtung
- H: horizontale Richtung

## Patentansprüche

1. Glättwerk (1), umfassend mindestens zwei zusammenwirkende Walzen (2, 3, 4), die zwischen sich einen Walzspalt ausbilden können, wobei das Glättwerk (1) einen Maschinenrahmen (5) aufweist, in dem die Walzen (2, 3, 4) drehbar gelagert sind, wobei der Maschinenrahmen (5) einen ersten Teil (6) und einen zweiten Teil (7) aufweist, wobei jeder Teil (6, 7) jeweils mindestens eine Walze (2, 3, 4) lagert und wobei Kopplungsmittel (8) angeordnet sind, um den ersten Teil (6) des Maschinenrahmens (5) mit dem zweiten Teil (7) des Maschinenrahmens (5) lösbar zu verbinden,
**dadurch gekennzeichnet,**
**dass** Bewegungsmittel (12) angeordnet sind, um das Glättwerk (1) bei gekoppeltem ersten und zweiten Teil (6, 7) in horizontaler Richtung (H) und in Richtung senkrecht zur Achse der Walzen (2, 3, 4) zu verschieben und um den ersten Teil (6) relativ zum zweiten Teil (7) nach Entkopplung des ersten Teils (6) vom zweiten Teil (7) in horizontaler Richtung (H) und in Richtung senkrecht zur Achse der Walzen (2, 3, 4) zu verschieben.

2. Glättwerk nach Anspruch 1, **dadurch gekennzeichnet, dass** die Kopplungsmittel (8) als formschlüssige Verbindung zwischen erstem und zweitem Teil (6, 7) des Maschinenrahmens (5) ausgebildet sind.

3. Glättwerk nach Anspruch 1 oder 2, **dadurch gekennzeichnet, dass** die Kopplungsmittel (8) als kongruent zusammenwirkende Hakenverbindung ausgebildet sind.

4. Glättwerk nach Anspruch 3, **dadurch gekennzeichnet, dass** die Hakenverbindung (8) mindestens einen am einen Teil (7) des Maschinenrahmens (5) ausgebildeten Haken (9) aufweist, welcher formschlüssig in mindestens eine am anderen Teil (6) des Maschinenrahmens (5) ausgebildete Ausnehmung (10) eingreifen kann.

5. Glättwerk nach einem der Ansprüche 1 bis 4, **dadurch gekennzeichnet, dass** die Kopplungsmittel (8) weiterhin Verriegelungsmittel umfassen, mit denen die beiden Teil (6, 7) des Maschinenrahmens (5) in der gekoppelten Position miteinander verriegelt werden können.

6. Glättwerk nach einem der Ansprüche 1 bis 5, **dadurch gekennzeichnet, dass** zumindest in einem Teil (7) des Maschinenrahmens (5) Bewegungsmittel (11) angeordnet sind, um den einen Teil (7) des Maschinenrahmens (5) von einer gekoppelten Position der Kopplungsmittel (8) in eine ungekoppelte Position zu bewegen.

7. Glättwerk nach Anspruch 6, **dadurch gekennzeichnet, dass** die Bewegungsmittel (11) zur Verschiebung des einen Teils (7) des Maschinenrahmens (5) relativ zum anderen Teil (6) des Maschinenrahmens (5) in eine vertikale Richtung (V) ausgebildet sind.

8. Glättwerk nach einem der Ansprüche 1 bis 7, **dadurch gekennzeichnet, dass** es weiterhin eine Ablage (13) für den einen Teil (7) des Maschinenrahmens (5) aufweist.

9. Glättwerk nach einem der Ansprüche 1 bis 8, **dadurch gekennzeichnet, dass** die am zweiten Teil (7) des Maschinenrahmens (5) angeordnete Walze (2) eine Temperierwalze, insbesondere eine Kühlwalze, ist.

10. Glättwerk nach einem der Ansprüche 1 bis 9, **dadurch gekennzeichnet, dass** die am zweiten Teil (7) des Maschinenrahmens (5) angeordnete Walze (2) mit einer Medienversorgung und/oder elektrischen Versorgung (14) in Verbindung steht, welche sowohl in der mit dem ersten Teil (6) gekoppelten als auch ungekoppelten Position an der Walze (2) verbleibt.

11. Glättwerk nach einem der Ansprüche 1 bis 10, **gekennzeichnet durch** Steuerungs- und/oder Regelungsmittel sowie von diesen angesteuerte Bewegungsmittel (11, 12), um die relative Bewegung zwischen den beiden Teilen (6, 7) des Maschinenrahmens (5) automatisch zu veranlassen.
